# EUROPEAN PATENT SPECIFICATION

(11) **EP 2 093 145 B1**
(45) Date of publication and mention of the grant of the patent: **13.02.2013**
(21) Application number: 09005527.8
(22) Date of filing: 21.02.2006
(51) Int. Cl.: B64C 27/32, B64C 27/33, B64C 27/51, F16F 9/20, F16F 13/08, B64C 27/35, B64C 27/00

(54) **Fluid-elastomeric damper assembly including internal pumping mechanism**
Fluidelastomere Stoßdämpferanordnung mit internem Pumpenmechanismus
Ensemble d'amortisseur fluide-élastomère incluant un mécanisme de pompage interne

(30) Priority: 18.02.2005 US 654185 P
(43) Date of publication of application: 26.08.2009
(62) Divisional of application: 06748233.1
(73) Proprietor: LORD CORPORATION, Cary, NC 27511 (US)
(72) Inventor: Russell, Donald, Fairview Pennsylvania 16415 (US)
(74) Representative: Dunlop, Brian Kenneth Charles

(56) References cited:
- WO-A-2004/043782
- WO-A1-99/06733
- US-A1- 2002 060 268

## Description

### FIELD OF THE INVENTION

The present invention relates generally to a damper assembly used to control movement/vibration in a mechanical system or the like. More specifically, the present invention relates to a fluid-elastomeric damper assembly including an internal pumping mechanism. More specifically the fluid-elastomeric damper assembly controls movement/vibration in a rotary-wing aircraft.

### BACKGROUND OF THE INVENTION

Dampers are coupled to one or more moving/vibrating structures. These moving/vibrating structures may include, for example, the flex-beam and the pitch case of the rotor of a rotary-wing aircraft or the like. The damper produces a damping force resisting the movement/vibration of the one or more moving/vibrating structures.

Advantageously, the damper is capable of accommodating movement/vibration in a plurality of directions. This is not always possible, for example, in the control of movement/vibration in the lead-lag direction of the rotor of a rotary-wing aircraft or the like.

Thus, what is needed is a damper assembly that accommodates movement and provides beneficial damping of the accommodated movements and vibrations. There is a need for a robust and reliable damper that is economically producible and allows for the creation of relatively higher damping forces and accommodates relatively greater movement/vibration of the one or more moving/vibrating structures than is possible with conventional damper assemblies. Although the assemblies, mechanisms, and methods of the present invention are described herein below in conjunction with the flex-beam and the pitch case of the rotor of a rotary-wing aircraft or the like, the assemblies, mechanisms, and methods of the present invention may be used in conjunction with any mechanical system or the like including one or more moving/vibrating structures that it is desirable to damp.

WO 2004/043782 describes a fluid damper assembly usable in accordance with a method according to the preamble of claim 1.

### BRIEF SUMMARY OF THE INVENTION

The present invention consists in a method for damping a relative motion between a first structure and a second structure, the method comprising: providing a housing; coupling a plurality of elastomer seals to the housing, wherein the housing and the plurality of elastomeric seals provide a fluid-elastomeric chamber for containing a fluid; disposing a fluid within the fluid-elastomeric chamber; disposing an internal fluid pump with at least one fluid moving piston within the fluid-elastomeric chamber, the internal fluid pump comprising a first fluid chamber and a second fluid chamber in communication via at least one orifice, said first fluid chamber including a first fluid backfiller and said second fluid chamber including a second fluid backfiller, said first fluid chamber and said second fluid chamber in communication with the fluid-elastomeric chamber, wherein said relative motion between said first structure and said second structure drives said at least one fluid moving piston to pump said fluid through said at least one orifice with said first fluid backfiller providing fluid communication of said fluid from said fluid-elastomeric chamber into said first fluid chamber and inhibiting a flow of said fluid from said first fluid chamber into said fluid-elastomeric chamber and said second fluid backfiller providing fluid communication of said fluid from said fluid-elastomeric chamber into said second fluid chamber and inhibiting a flow of said fluid from said second fluid chamber into said fluid-elastomeric chamber.

The method also includes coupling a plurality of elastomeric seals to a housing, wherein the housing and the plurality of elastomeric seals provide a fluid-elastomeric chamber for containing a damper fluid. The fluid outside the piston and contained in the fluid-elastomeric chamber may have an operational ambient fluid pressure PA, and the fluid inside the piston having an operational dynamic fluid pressure PD when pumped by the piston with PD ≥ 1. 01 PA.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of damper assemblies, and together with the description serve to explain the principals and operation of the invention.

### BRIEF DESCRIPTION OF THE DRAWINGS

Figure 1 is a cross-sectional side (cord-wise) view of one embodiment of the fluid-elastomeric damper assembly, highlighting an internal pumping device disposed with a fluid-elastomeric chamber of the fluid-elastomeric damper assembly (the top portion of Figure 1 illustrating the internal pumping device, the bottom portion of Figure 1 illustrating the fluid-elastomeric chamber);

Figure 2 is a perspective view of the fluid-elastomeric damper assembly of Figure 1, again highlighting the internal pumping device disposed with the fluid-elastomeric chamber of the fluid-elastomeric damper assembly (the top portion of Figure 2 illustrating the internal pumping device, the bottom portion of Figure 2 illustrating the fluid-elastomeric chamber);

Figure 3A-B are exploded perspective views of the fluid-elastomeric damper assembly of Figures 1 and 2, again highlighting the internal pumping device disposed with the fluid-elastomeric chamber of the fluid-elastomeric damper assembly;

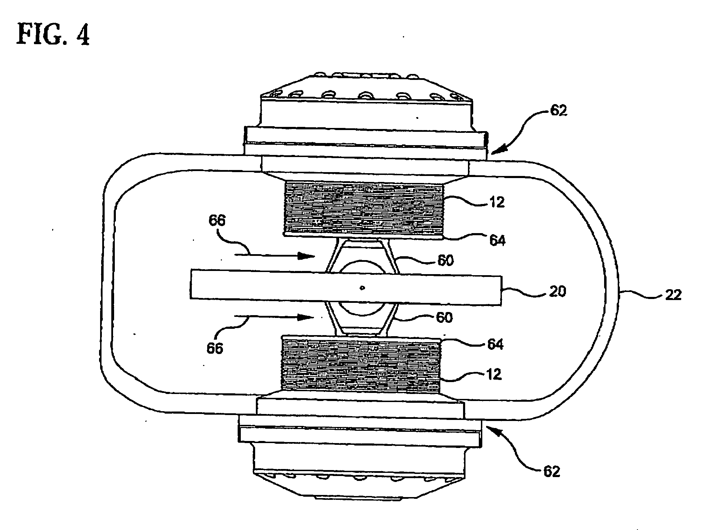

Figure 4 is a side (cord-wise) view of the fluid-elastomeric damper assembly of Figures 1-3;

Figure 5 is a cross-sectional front (beam-wise) view of the fluid-elastomeric damper assembly of Figures 1-4 (the top portion of Figure 5 illustrating the internal pumping device, the bottom portion of Figure 5 illustrating the fluid-elastomeric chamber);

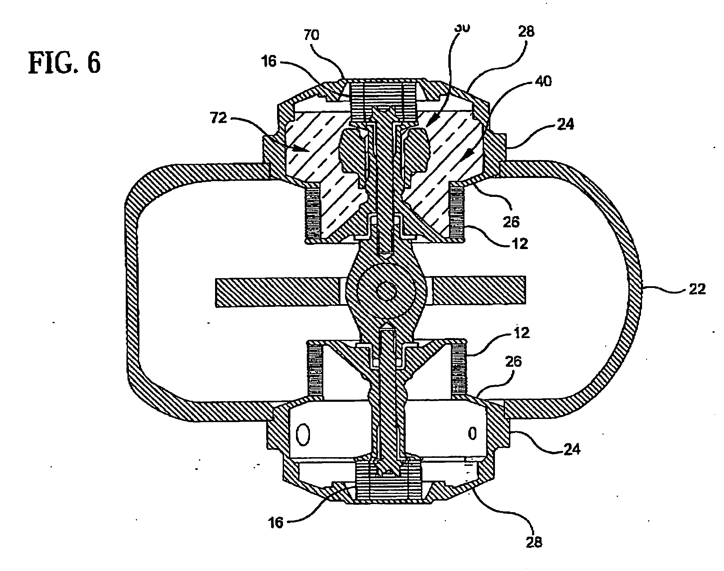

Figure 6 is another cross-sectional side (cord-wise) view of the fluid-elastomeric damper assembly of Figures 1-5 (the top portion of Figure 6 illustrating the internal pumping device, the bottom portion of Figure 6 illustrating the fluid-elastomeric chamber);

Figure 7A-D are cross-sectional top views of the fluid-elastomeric damper assembly of Figures 1-6, again highlighting the internal pumping device disposed with the fluid-elastomeric chamber of the fluid-elastomeric damper assembly;

Figure 8 is another perspective view of the fluid-elastomeric damper assembly of Figures 1-7;

Figure 9 is a top view of the fluid-elastomeric damper assembly of Figures 1-8;

Figure 10 is a front (beam-wise) view of the fluid-elastomeric damper assembly of Figures 1-9.

Figure 11A-B are cutaway perspective views of the fluid-elastomeric damper assembly highlighting the internal pumping device and the fluid backfillers; and

Figure 12 shows a fluid backfiller spring plate valve embodiment.

### DETAILED DESCRIPTION OF THE INVENTION

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

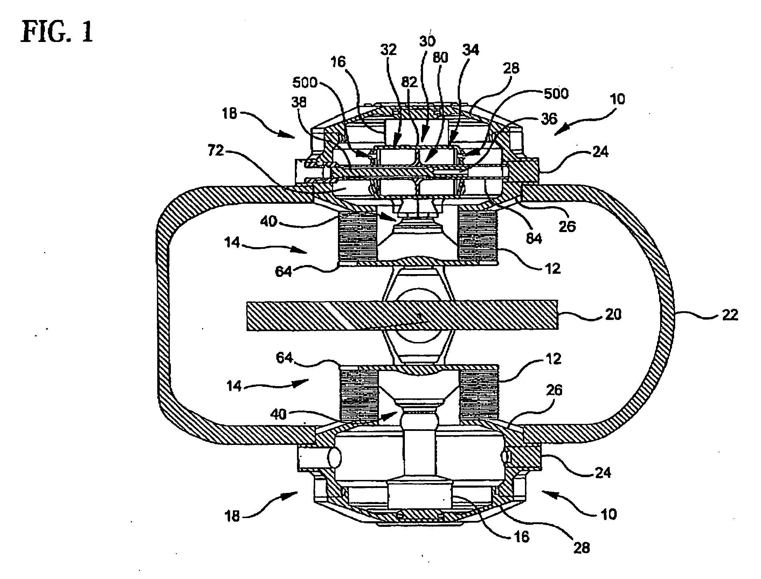

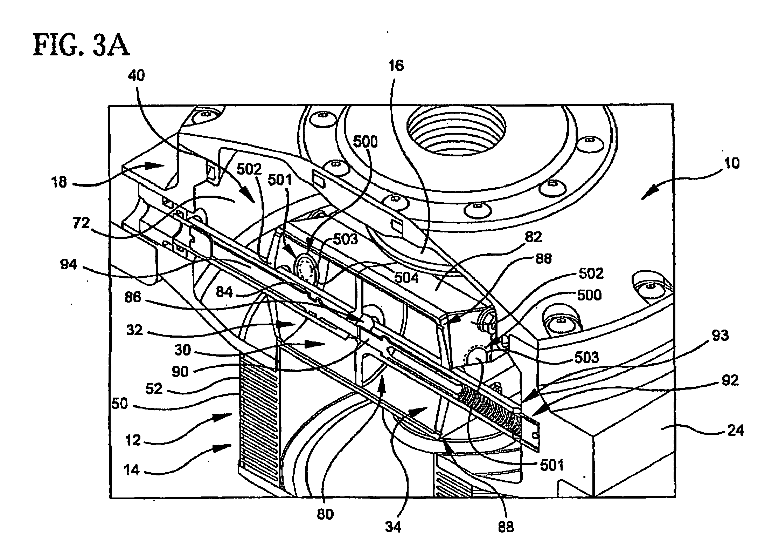

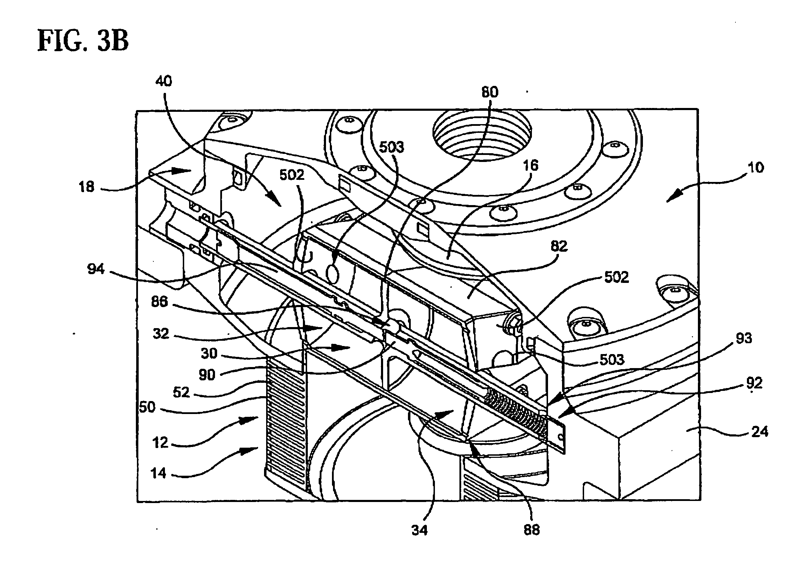

Reference will now be made in detail to the present preferred embodiments of the invention, examples of which are illustrated in the accompanying Drawings. The invention includes a fluid-elastomeric damper assembly with a reciprocating piston structure grounded to a first structure and driven by a second structure with the piston structure submerged in a fluid and having a first fluid filled chamber and a second fluid filled chamber which communicate via a pump restriction orifice through which the piston forces the fluid through. The invention includes fluid-elastomeric damper assembly 10 which includes a first elastomer seal 12, such as a rubber seal or the like, disposed at a first end 14 of the fluid-elastomeric damper assembly 10 and a second elastomer seal 16, such as a rubber seal or the like, disposed at a second end 18 of the fluid-elastomeric damper assembly 10. The first elastomer seal 12 and the second elastomer seal 16 are fixedly attached or otherwise coupled to a first moving/vibrating structure 20, such as a flex-beam of the rotor of a rotary-wing aircraft or the like, and the first elastomer seal 12 and the second elastomer seal 16 are fixedly attached or otherwise coupled to a second moving/vibrating structure 22, such as a pitch case of the rotor of a rotary-wing aircraft or the like. The first elastomer seal 12 and the second elastomer seal 16 are both bonded, fixedly attached, or otherwise coupled to a housing structure 24 including, for example, a first housing member 26, a second housing member 28, and a third housing member 70. The first elastomer seal 12 and the second elastomer seal 16 are also both bonded, fixedly attached, or otherwise coupled to a substantially circular base plate 64. Together, the first elastomer seal 12, the second elastomer seal 16, the housing structure 24, and the substantially circular base plate 64 are operable for containing a damper fluid. An internal pumping mechanism 30 is also disposed within the housing structure 24. The internal pumping mechanism 30 is grounded to the first moving/vibrating structure 20 and moves in relation to the housing structure 24 and the second moving/vibrating structure 22 to which the housing structure 24 is grounded. The internal pumping mechanism 30 is configured such that, when the internal pumping mechanism 30 moves with respect to the housing structure 24 and the second/moving vibrating structure 22, the fluid surrounding and disposed within the internal pumping mechanism 30 is pumped from at least a first variable volume chamber 32 disposed within the internal pumping mechanism 30 to at least a second variable volume chamber 34 disposed within the internal pumping mechanism 30 through a restriction, i.e., an orifice 86 (Figure 3). Optionally, the relative size of the restriction is controlled by an adjustable pressure relief device 36 and/or a temperature-compensating device 38 (both described in greater detail herein below). It should be noted that Figure 1 illustrates an upper fluid-elastomeric damper assembly 10 (top portion of Figure 1) including an internal pumping mechanism 30 and a lower fluid-elastomeric damper assembly 10 (bottom portion of Figure 1) without an internal pumping mechanism 30. The lower-fluid-elastomeric damper 10 assembly may, optionally, include an internal pumping mechanism 30.

Advantageously, the first elastomer seal 12, the second elastomer seal 16, the housing structure 24, and the substantially circular base plate 64 provide a fluid-elastomeric chamber 40 operable for containing the fluid and in which the internal pumping mechanism 30 may be submerged. This fluid-elastomeric chamber 40 is flexible and allows the internal pumping mechanism 30 to damp movement/vibration in a primary direction with a relatively high damping force. Movement/vibration in a plurality of other directions are also accommodated by design, due to the coupling features of the internal pumping mechanism 30. It should be noted that two (2) fluid-elastomeric damper assemblies 10 are illustrated and used in combination such as in Figure 1 (and in other drawings described herein below) in order to damp lead-lag movement/vibration in the rotor of a rotary-wing aircraft or the like. Figure 1 illustrates an upper fluid-elastomeric damper assembly 10 (top portion of Figure 1) including an internal pumping mechanism 30 and a lower fluid-elastomeric damper assembly 10 (bottom portion of Figure 1) without an internal pumping mechanism 30. The lower-fluid-elastomeric damper 10 assembly preferably includes an internal pumping mechanism 30.

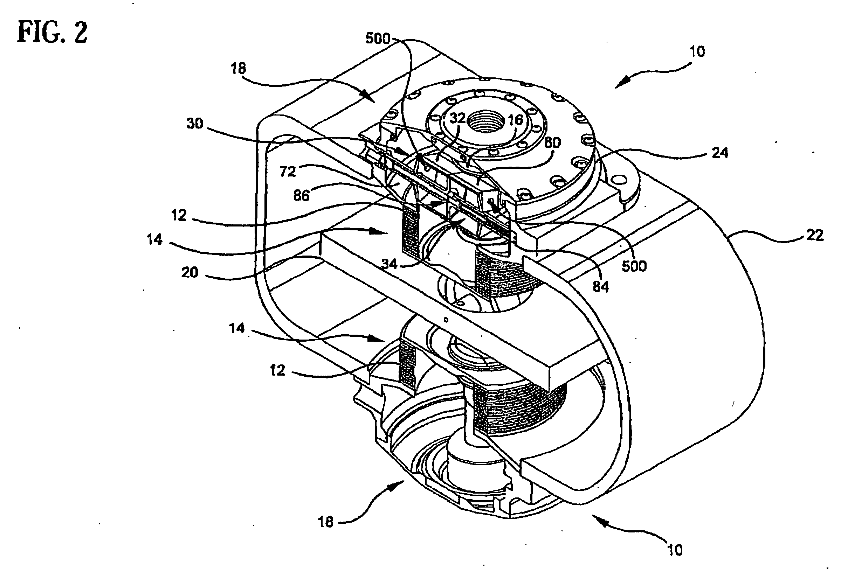

Referring to Figures 2 and 3A-B. the first elastomer seal 12 disposed at the first end 14 of the fluid-elastomeric damper assembly 10 and the second elastomer seal 16 disposed at the second end 18 of the fluid-elastomeric damper assembly 10 may, optionally, include a plurality of metal or substantially rigid laminates (shims) 50 (Figure 3A-B) or the like disposed within a rubber seal 52 (Figure 3A-B) or the like. This configuration provides both the first elastomer seal 12 and the second elastomer seal 16 with strength/rigidity and flexibility/pliability. Both the first elastomer seal 12 and the second elastomer seal 16 may have a substantially cylindrical or conical shape, although other suitable shapes may be utilized. In an exemplary embodiment of the present invention, the diameter of the second elastomer seal 16 is between about one-third (1/3) and about three-quarters (3/4) the diameter of the first elastomer seal 12. Other shapes and sizes may, however, be used as necessary.

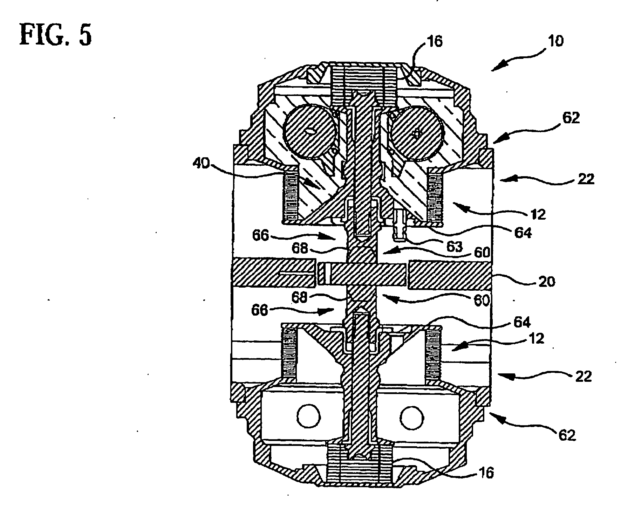

The first elastomer seal 12 is fixedly attached or otherwise coupled to the first moving/vibrating structure 20, such as a flex-beam of the rotor of a rotary-wing aircraft or the like, via a first attachment mechanism 60. Likewise, the first elastomer seal 12 and the second elastomer seal 16 (Figure 5) are fixedly attached or otherwise coupled to the second moving/vibrating structure 22, such as a pitch case of the rotor of a rotary-wing aircraft or the like, via a second attachment mechanism 62. The first attachment mechanism 60 may include, for example, the substantially circular base plate 64 bonded, fixedly attached, or otherwise coupled to the first elastomer seal 12 and the second elastomer seal 16. The base plate 64 is fixedly attached or otherwise coupled to one or more spanning members 66 that are, in turn, fixedly attached or otherwise coupled to a compliant member 68 (Figure 5) associated with the first moving/vibrating structure 20. The base plate 64, the one or more spanning members 66, and the compliant member 68 may be made of, for example, a metal or any other substantially rigid material. Optionally, the base plate 64, the one or more spanning members 66, and/or the compliant member 68 may be integrally formed. Although an exemplary first attachment mechanism 60 has been described herein, any other first attachment mechanism 60 operable for fixedly attached or otherwise coupling the first elastomer seal 12 and the base plate 64 to the first moving/vibrating structure 20 may be used. As is described in greater detail herein below, the second attachment mechanism 62 fixedly attached or otherwise coupled to the second moving/vibrating structure 22 may, optionally, be integrally formed/coincident with the housing structure 24 (Figure 1). Optionally, the fluid-elastomeric damper assembly 10 of the present invention further includes a gas charge/discharge valve 63 operable for introducing damping fluid and/or a gas, such as nitrogen or the like, into and/or removing damping fluid and/or a gas from the fluid-elastomeric chamber 40.

The first elastomer seal 12 and the second elastomer seal 16 are both bonded, fixedly attached, or otherwise coupled to the housing structure 24, which may be made of, for example, a metal or any other substantially rigid material. In an exemplary embodiment of the present invention, the housing structure 24 includes a first housing member 26 and a second housing member 28. The first housing member 26 may be a substantially cup-shaped structure. Accordingly, the second housing member 28 may be a substantially disc-shaped structure. Optionally, the housing structure 24 may also include a third, substantially disc-shaped housing member 70 that, together with the first housing member 26 and the second housing member 28, serves as the second attachment mechanism 62, fixedly attaching or otherwise coupling the first elastomer seal 12 and the second elastomer seal 16 to the second moving/vibrating structure 22. The first housing member 26, the second housing member 28, and the third housing member 70 may be bolted or otherwise attached together, or they may be integrally formed. Together, the first elastomer seal 12, the second elastomer seal 16, and the housing structure 24 are operable for containing the damper fluid 72 in the fluid-elastomeric chamber 40. The fluid-elastomeric chamber 40 partially formed by the first elastomer seal 12, the second elastomer seal 16, and the housing structure 24 may, optionally, have a plurality of circular diameters substantially conforming to the shape of the internal pumping mechanism 30 disposed therein.

The internal pumping mechanism 30 disposed within the housing structure 24 is grounded to the first moving/vibrating structure 20 and moves in relation to the housing structure 24, which is grounded to the second moving/vibrating structure 22. The internal pumping mechanism 30 includes one or more piston structures 80 disposed within a piston structure housing 82. Preferably, the one or more piston structures 80 include one or more substantially cylindrical, hollow structures. Preferably, the one or more piston structure housings 82 are free to move along one or more axially-extending structures 84, such as hollow and/or solid rods or the like, integrally formed with the piston assembly. Preferably the piston structure housing 82 is grounded to the first moving/vibrating structure 20 by a stem piece that may be integrally formed with the base plate 64 or, optionally, may include a plurality of components. The piston structure housing 82 may be constructed in multiple sections to allow grounding of the piston structure housing 82 to the stem piece of the base plate 64. The one or more piston structures include a first chamber 32 and a second chamber 34 separated by the piston assembly, with the first chamber 32 and the second chamber 34 in fluid communication through a pumping piston restriction, i.e., an orifice 86. The piston assembly extends through the piston structure housing 82 to the housing structure 24, to which it is grounded. A plurality of relatively small holes 88 are disposed within the walls of the one or more piston structure housings 82, allowing trapped gas and a limited flow of the fluid 72 between the fluid-elastomeric chamber 40 and the internal pumping mechanism 30. Additionally, clearance between the piston structure housing 82 and the piston assembly allow a limited flow of fluid between the fluid-elastomeric chamber 40 and the internal pumping mechanism 30. The pumping piston restriction orifices 86 represents the path of least resistance for the fluid 72 within the fluid-elastomeric chamber 40 with the orifices 86 sized relatively large compared to the small holes 88. The internal pumping mechanism 30 is configured such that, when the one or more piston structure, housing 82 move with respect to the housing structure 24 and the second/moving vibrating structure 22, the fluid 72 surrounding and disposed within the one or more piston structures is pumped from the first chamber 32 to the second chamber 34 by the movement of piston structures 80 with the fluid 72 pumped back and forth between the first and second chambers through the orifice 86. As shown in Figures 1-3, the relative linear motion between the first moving structure 20 and the second moving structure 22 drives the linear reciprocating motion of the internal pumping mechanism 30, and forces the flow of fluid 72 through the orifice 86 between the first chamber 32 and the second chamber 34. This fluid restriction 86 creates fluid damping forces. As shown the pumping piston restriction orifice 86 can be in the plate piston 80.

The invention includes a method of making a rotary-wing aircraft fluid-elastomeric damper assembly 10 for damping a relative motion between a first rotary-wing aircraft structure 22 and a second rotary-wing aircraft structure 20 in a rotary-wing aircraft. The plurality of elastomeric seals 12, 16 are coupled to a housing 24, wherein the housing 24 and the plurality of elastomeric seals 12, 16 provide a fluid-elastomeric chamber 40 for containing a fluid 72; disposing an internal fluid pump 30 with at least one fluid moving piston 80 within the housing 24 and the fluid-elastomeric chamber 40 and grounding the internal fluid pump 30 to the first structure, disposing a fluid 72 within the fluid-elastomeric chamber 40 wherein the internal fluid pump 30 comprises a first substantially fluid-filled chamber 32 and a second substantially fluid-filled chamber 34 in communication via at least one orifice 86, said first substantially fluid-filled chamber 32 and said second substantially fluid-filled chamber 34 in communication with the fluid-elastomeric chamber 40; wherein said relative motion between said first structure 22 and said second structure 20 drives said at least one fluid moving piston 80 to pump said fluid 72 through said at least one orifice 86. In a preferred embodiment said at least one fluid moving piston 80 is a linearly reciprocating piston that pumps said fluid 72 through said at least one orifice 86 with a linear motion.

Thus, the first elastomer seal 12, the second elastomer seal 16, the housing structure 24, and the base plate 64 provide a fluid-elastomeric chamber 40 operable for containing the fluid 72 and in which the internal pumping mechanism 30 may be submerged. This fluid-elastomeric chamber 40 is flexible and allows the internal plumping mechanism 30 to damp movement/vibration in a primary direction with a relatively high damping force.

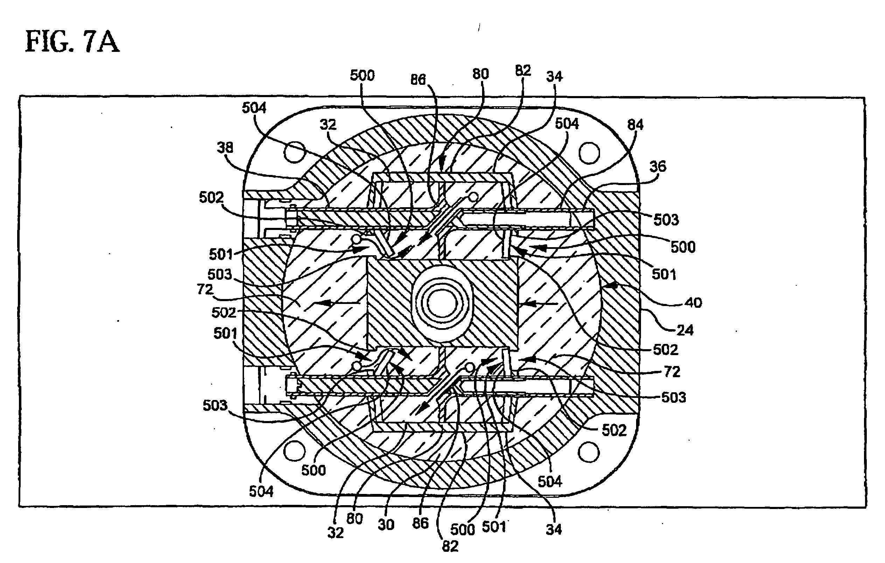

Referring to Figure 7A, as described above, an adjustable pressure relief device 36 and/or a temperature-compensating device 38 may be disposed within the one or more hollow axially extending structures 84 (i.e., the piston assembly) that carry the one or more piston structures 80. The adjustable pressure relief device 36 includes a spring-loaded member 90 (Figure 3) that partially protrudes into the orifice 86 (Figure 3), selectively blocking a portion thereof and restricting the flow of fluid there through. The spring-loaded member 90 of the adjustable pressure relief device 36 is displaced in the presence of relatively high fluid pressure. The amount of force required to displace the spring-loaded member 90 of the adjustable pressure relief device 36 may be adjusted via an adjustment mechanism 92 (Figure 3) disposed within the housing structure 24. Additionally, the spring-side of the hollow structure communicates with the fluid-elastomeric chamber 40 via one or more holes 93 (Figure 3) disposed within and through the walls of the hollow portion of the piston assembly 84. These communication holes 93 allow a pressure differential to occur between the relatively high dynamic pressure at the orifice 86 and the steady ambient pressure of the fluid-elastomeric chamber 40, actuating the adjustable pressure relief device 36. The temperature-compensating device 38 includes a temperature-sensitive member 94 (Figure 3) that partially protrudes into the orifice 86, selectively blocking a portion thereof and restricting the flow of fluid therethrough. Preferably, the temperature sensitive member has a predetermined thermal expansion coefficient such that the degree of flow restriction may be varied for a given change in temperature. The pressure relief device 36 and the temperature-compensating device 38 work together to provide a predetermined degree of damping. The grounding of the piston assembly to the housing structure 24 is accomplished by means of one or more retaining structures. The one or more retaining structures may be solid and/or hollow and allow for the adjustment of the internal mechanisms of the fluid-elastomeric damper assembly 10. Preferably, the one or more retaining structures form an integral seal with the piston assembly and the housing structure 24. The one or more retaining structures may allow access to either or both, if multiple retaining structures disposed adjacent to the appropriate mechanisms are used, the adjustable pressure relief device 36 and/or the temperature-compensating device 38.

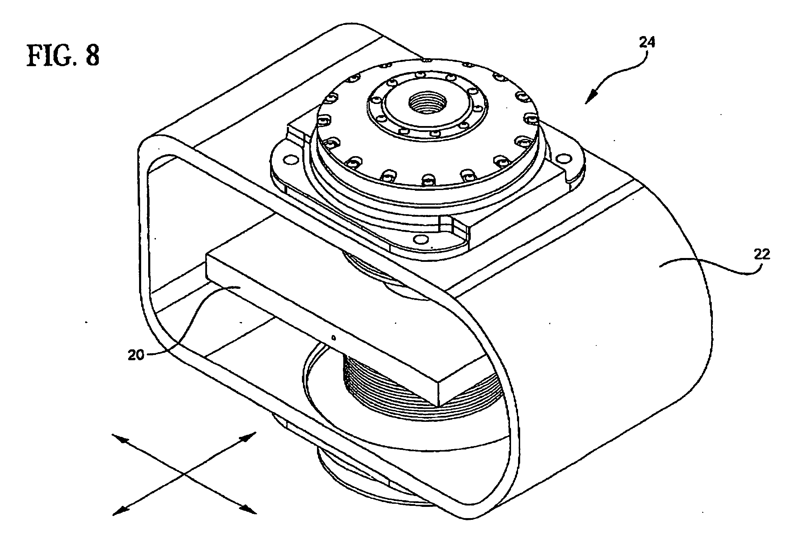

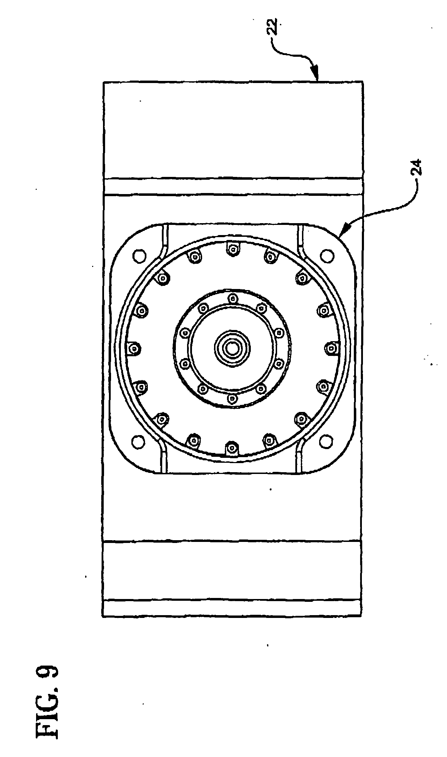

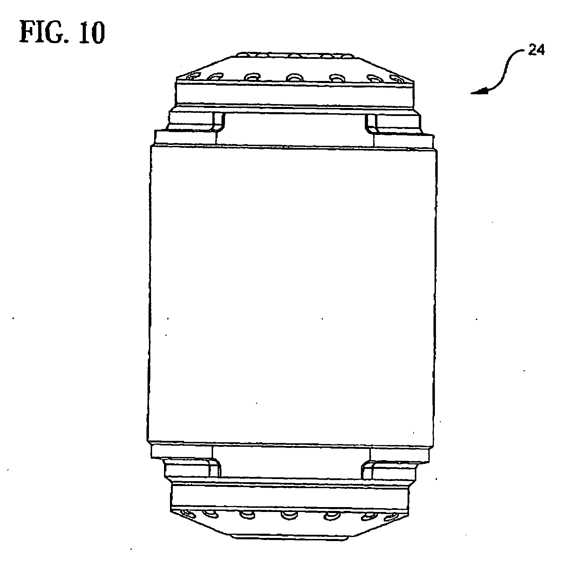

Figures 8, 9, and 10 provide several other views of the fluid-elastomeric damper assembly of the present invention, for use in conjunction with a typical flex-beam helicopter rotor assembly.

Preferably the fluid-elastomeric damper assembly 10 provides beneficial damping of a relative motion between a first structure 20 and a second structure 22. The fluid-elastomeric damper assembly 10 preferably comprises the elastomer seals 12,16 coupled to the fluid-elastomeric chamber housing 24, with the fluid-elastomeric chamber housing 24 and the elastomer seals 12,16 providing the fluid-elastomeric chamber 40 operable for containing damper fluid 72. The fluid-elastomeric damper assembly 10 internal pumping mechanism 30 with at least one fluid moving piston 80 disposed within the fluid-elastomeric chamber 40 preferably includes the first substantially fluid-filled variable volume chamber 32 and the second substantially fluid filled variable volume chamber 34 with the internal pumping mechanism driven by the relative motion wherein the piston 80 forces the fluid 72 through the pumping piston restriction orifice 86 between the first fluid variable volume chamber 32 and the second fluid variable volume chamber 34. The first fluid chamber 32 includes a first fluid backfiller 500, the first fluid backfiller 500 providing fluid communication of the fluid 72 from the fluid-elastomeric chamber 40 into the first fluid chamber 32 and inhibiting a flow of the fluid 72 from the first fluid chamber 32 into the fluid-elastomeric chamber 40. The second fluid chamber 34 includes a second fluid backfiller 500, the second fluid backfiller 500 providing fluid communication of the fluid 72 from the fluid-elastomeric chamber 40 into the second fluid chamber 34 and inhibiting a flow of the fluid 72 from the second fluid chamber 34 into the fluid-elastomeric chamber 40. The relative motion between the first structure 20 and the second structure 22 pumps the fluid 72 through the at least one restriction orifice 86. The fluid-elastomeric damper assembly internal pumping mechanism 30 preferably includes a second fluid moving piston 80, with the second fluid moving piston 80 forcing the fluid 72 through a second pumping piston restriction orifice 86 between a third substantially fluid-filled variable volume chamber 32 and a fourth substantially-fluid-filled variable volume chamber 34 with the third fluid variable volume chamber 32 including a third fluid backfiller 500, the third fluid backfiller 500 providing fluid communication of the fluid 72 from the fluid-elastomeric chamber 40 into the third fluid chamber 32 and inhibiting a flow of the fluid 72 from the third fluid chamber 32 into the fluid-elastomeric chamber 40. The fourth fluid variable volume chamber 34 includes a fourth fluid backfiller 500, the fourth fluid backfiller 500 providing fluid communication of the fluid 72 from the fluid-elastomeric chamber 40 into the fourth fluid chamber 34 and inhibiting a flow of the fluid 72 from the fourth fluid chamber 34 into the fluid-elastomeric chamber 40. The relative motion between the first structure 20 and the second structure 22 is operable for pumping the fluid 72 through the second restriction orifice 86.

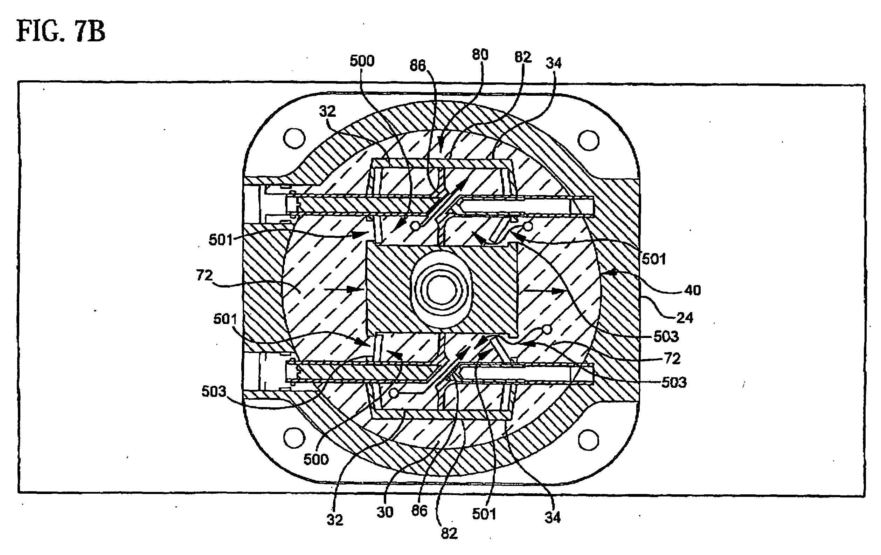

The fluid-elastomeric damper assembly backfiller 500 is comprised of a valve 501. The backfiller valve 501 is relatively closed and restricts fluid flow in the direction from the fluid variable volume chamber 32, 34 back into the surrounding fluid-elastomeric chamber 40 and relatively open with relatively low restriction of fluid flow in the opposite direction from the surrounding fluid-elastomeric chamber 40 into the fluid variable volume chamber when the volume of its variable volume chamber is increasing. Preferably the variable volume chamber backfiller 500 is comprised of a flow blocker spring plate 504, with the spring plate 504 allowing fluid flow into the fluid variable volume chamber 32, 34 when the volume of the variable volume chamber is increasing and the spring plate 504 closing and blocking fluid flow from the variable volume back into the fluid-elastomeric chamber 40 when the volume of the variable volume chamber is decreasing. As shown in Figure 7A when the piston housing 82 of the internal fluid pumper 30 is moving to the left relative to the surrounding housing 24 and the fluid-elastomeric chamber 40 the first backfiller 500 opens and allows an inflow of fluid 72 into the first variable volume fluid chamber 32 when the volume of the first fluid chamber 32 is increasing at a high rate of change. The volume of the second variable volume fluid chamber 34 is decreasing front this internal fluid pumper 30 piston housing 82 moving to the left relative to the surrounding housing 24, with the fluid in the second fluid chamber 34 pumped through the orifice 86 into the first variable volume fluid chamber 32 with the second backfiller valve 501 closed. As shown in Figure 7B when the internal pumper piston housing 82 moves to the right relative to the fluid-elastomeric chamber 40 and the surrounding housing 24, the first fluid chamber 32 first backfiller spring plate flapper valve 501 in the left side of the pumper piston housing 82 closes because the first fluid chamber 32 on this side is compressed against the piston 80 with the fluid forced through the orifice 86 in the piston. This causes an increase in pressure in this left side first variable volume fluid chamber 32 that seats the backfiller spring plate flapper valve 501 against the inside of the internal piston pumper housing closing the fluid communication opening 503. The fluid in the right side second variable volume fluid chamber 34 is uncompressed causing a decrease in pressure (to something less than the steady ambient pressure of the outside fluid-elastomeric chamber 40) which cause the backfill flapper valve 501 to unseat and open which allows fluid 72 from the outside fluid-elastomeric chamber 40 to backfill into this right side lower pressure second fluid chamber 34.

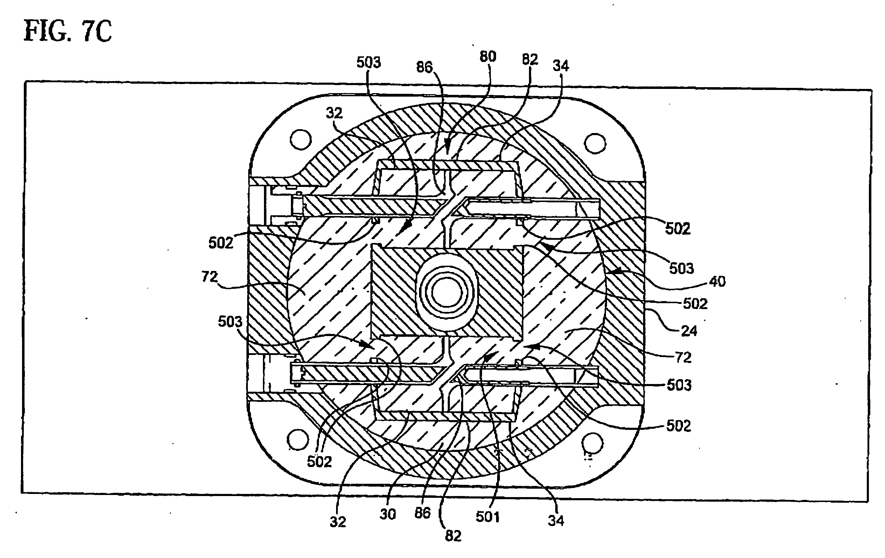

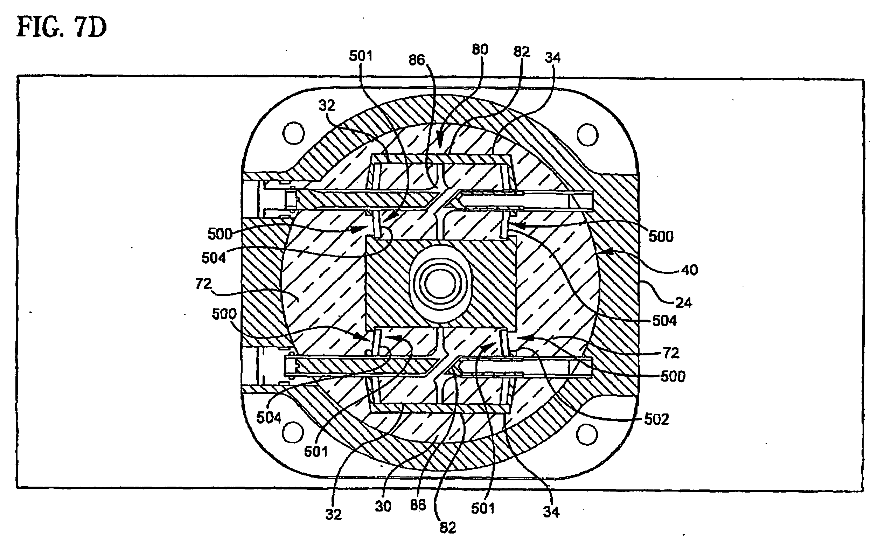

Preferably the first fluid chamber 32 is comprised of a first chamber housing wall 502 with the first chamber housing wall 502 segregating the first fluid chamber 32 from the fluid-elastomeric chamber 40. As shown in Figure 7C the first fluid chamber housing wall 502 separates the fluid 72 inside the first fluid chamber 32 from the fluid 72 out in the fluid-elastomeric chamber 40, with the fluid chamber housing wall 502 having a fluid communication opening 503. In Figure 7C no relative movement is shown, and the backfill flapper valves 501 are not shown to clearly illustrate the chamber housing walls 502 of the variable volume fluid chambers and the fluid backfiller communication openings 503 in the walls 502. Figure 7D illustrates no relative movement as shown in Figure 7C, but with the backfill flapper valves 501 blocking the fluid communication openings 503 in the walls 502. Preferably the fluid backfiller 500 is comprised of a flow blocker backfill spring plate 504, with the spring plate 504 adjacent the fluid communication opening 503 in the chamber housing wall 502 of its variable volume fluid chamber. Preferably the backfill flapper valve spring plate restricts flow in one direction and provides low restriction of fluid 72 in the opposite direction, with the spring plate 504 covering the wall opening 503 and obstructing, blocking, and plugging the flow of fluid 72 from inside its fluid chamber through the opening 503 in chamber wall 502 out into the fluid-elastomeric chamber 40. Preferably the spring plate backfiller 500 is pressure activated, with a fluid pressure drop in the variable volume fluid chamber the spring plate 504 deflects to an open position allowing an in flow of fluid 72 back into the increasing volume variable volume chamber from the fluid-elastomeric chamber 40 driven by the increasing volume pressure drop, such as a high amplitude displacement of the piston 80, the pressure drop from a first direction relative movement of the piston housing 82 relative to the housing 40 and orifice 86 along axially-extending piston structure rod 84 inside fluid-elastomeric chamber 40 opens the opening 503 and fluid 72 flows into the variable volume chamber so when the piston stroke pumping direction is reversed to the opposite direction with the volume of the variable volume chamber decreasing the variable volume chamber will be full of fluid 72, the opening 503 will be closed by the backfiller plate 504 and the fluid 72 will then be forced through the restriction orifice 86, with the fluid flow through the pumping piston restriction orifice 86 dissipating the unwanted kinetic energy of the relative motion between the first structure 20 and the second structure 22. Preferably the backfiller plate 504 of the second fluid chamber 34 opens fluid flow into the second fluid chamber when the volume of the second fluid chamber 34 is increasing and the volume of the first fluid chamber 32 is decreasing with the backfiller plate 504 of the first fluid chamber 32 closed with the backfiller plate blocking fluid 72 from flowing through first fluid chamber wall opening 503 while the fluid 72 is forced from the second chamber 34 through the restriction orifice 86 into the first chamber 32.

Preferably the internal pumping mechanism fluid pump 30 includes a second fluid moving piston 80 with a piston housing 82 forming a third substantially fluid-filled chamber 32 and a fourth substantially-fluid-filled chamber 34 which are in fluid communication with the fluid-elastomeric chamber 40. The second fluid moving piston 80 forces the fluid 72 through a second pumping piston restriction orifice 86 between the third fluid chamber 32 and the fourth fluid chamber 34. The third variable volume chamber 32 includes a third fluid backfiller 500 providing fluid communication of the fluid 72 from the fluid-elastomeric chamber 40 into the third fluid chamber 32 and inhibiting a flow of the fluid 72 from the third fluid chamber 32 back into the fluid-elastomeric chamber 40. The fourth fluid chamber 34 includes a fourth fluid backfiller 500 providing fluid communication of the fluid 72 from the fluid-elastomeric chamber 40 into the fourth fluid chamber 34 and inhibiting a flow of the fluid 72 from the fourth fluid chamber 34 back into the fluid-elastomeric chamber 40 wherein the relative motion between the first structure 20 and the second structure 22 is operable for pumping the fluid through the second restriction orifice 86.

Preferably the damper assembly first fluid chamber housing wall 502 segregates the first fluid chamber 32 from the fluid-elastomeric chamber 40 by separating and segregating fluid 72 inside the first fluid chamber from the fluid out in the surrounding fluid-elastomeric chamber 40 with the first fluid backfiller 500 comprised of a valve 501 which provides liquid flow control through opening 503 in wall 502. The first chamber housing wall 502 defines the fluid communication opening 503 with the first fluid backfiller valve proximate the first chamber housing wall fluid communication opening 503. The second chamber housing wall 502 of the second fluid chamber 34 is preferably distal from the first chamber housing wall 502 of first chamber 32. The second chamber housing wall 502 segregates the second fluid chamber 34 from the surrounding outside fluid-elastomeric chamber 40, with the second chamber housing wall 502 defining a second fluid communication opening 503 and the second fluid backfiller 500 is comprised of a second valve 501 proximate this second chamber housing wall second fluid communication opening 503, wherein a relative motion of the internal pumping mechanism piston opens the first valve 501 and closes the second valve 501 with pumping of the internal pumping mechanism 30 in a first direction with the first fluid chamber 32 variable volume increasing and the second fluid chamber 34 variable volume decreasing. The third chamber housing wall 502 defines the fluid communication opening 503 with the third fluid backfiller valve 501 proximate the third chamber housing wall fluid communication opening 503. The fourth chamber housing wall 502 of the fourth fluid chamber 34 is preferably distal from the third chamber housing wall 502 of third chamber 32. The fourth chamber housing wall 502 segregates the fourth fluid chamber 34 from the surrounding outside fluid-elastomeric chamber 40, with the fourth chamber housing wall 502 defining a fourth fluid communication opening 503 and the fourth fluid backfiller 500 is comprised of a fourth valve 501 proximate this fourth chamber housing wall fourth fluid communication opening 503, wherein a relative motion of the internal pumping mechanism piston opens the third valve 501 and closes the fourth valve 501 with pumping of the internal pumping mechanism 30 in a first direction with the third fluid chamber 32 variable volume increasing and the fourth fluid chamber 34 variable volume decreasing. Preferably the motion of the first structure 20 relative to the second structure 22 pumps the internal pumping mechanism 30 with the first and third backfiller valves 501 opening to provide fluid flow in from the surrounding outside fluid-elastomeric chamber 40 while the second and fourth backfiller valves 501 close to inhibit fluid flow from the second and fourth chambers into the surrounding outside fluid-elastomeric chamber 40.

Preferably in operation of the fluid elastomeric damper assembly 10 with the damper internal fluid pump driven by the relative motion between the first structure 20 and the second structure 22 the damper fluid 72 outside the at least one fluid moving piston 80 and contained in the fluid-elastomeric chamber 40 has an operational ambient fluid pressure PA. The operational ambient fluid pressure PA is the pressure of fluid 72 outside the internal fluid pump but inside the damper fluid-elastomeric chamber 40 while the damper 10 is operating. The fluid 72 inside the at least one fluid moving piston variable volume chamber 32,34 in which the variable volume is being decreased by the relative motion has an operational dynamic fluid pressure PD when pumped by the at least one fluid moving piston with PD ≥ 1.01PA. Preferably the relative motion compresses the variable volume chamber and decreases the fluid volume at a high rate of change therein that provides for the increase in pressure of the fluid 72 to the operational dynamic fluid pressure PD with the backfiller valve 501 closed and the fluid forced through the restriction orifice 86 into the opposing variable volume chamber in which the variable volume is increasing. In operation the relative motion preferably drives the internal pumping mechanism 30 with the damper fluid pressurized in the variable volume chamber with PD-PA ≥ 1 PSI. In embodiments of the fluid elastomeric damper assembly PD ≥ 1.05PA, preferably PD ≥ 1.06PA, and more preferably PD ≥ 1.07PA. In embodiments of the fluid elastomeric damper assembly PD-PA ≥ 10PSI, preferably PD-PA ≥ 100PSI, more preferably PD-PA ≥ 500PSI. In embodiments of the fluid elastomeric damper assembly 10 preferably PD ≥ 500PSI, such as about 873PSI, and about 1000PSI. In embodiments of the fluid elastomeric damper assembly 10 preferably PA ≤100PSI, more preferably PA≤ 50PSI, such as about 15PSI.

The fluid elastomeric damper assembly 10 preferably operates with a broad range of fluid viscosities. Preferably the provided damper fluid 72 has a viscosity less than 5x10⁻³ m². s⁻¹ (5000 centistokes), preferably a damper fluid with a viscosity in the range from 3x10⁻⁵ to 5x10⁻³ m². s⁻¹ (30 to 5000 centistokes). Preferably the damper fluid 72 has a viscosity less than 1.5x10⁻³ m². s⁻¹ (1,500 centistokes), preferably a viscosity in the range of 4x10⁻⁵ to 1.2x10⁻³ m². s⁻¹ (40 to 1200 centistokes), and more preferably 5x10⁻⁵ to 1x10⁻³ m². s⁻¹ (50 to 1000) centistokes. The backfiller damper assembly 10 preferably can utilize a broad range of viscosities, from relatively low at about 3x10⁻⁵ m². s⁻¹ (30 centistokes) to relatively high at about 5x10⁻⁵ m². s⁻¹ (5000 centistokes).

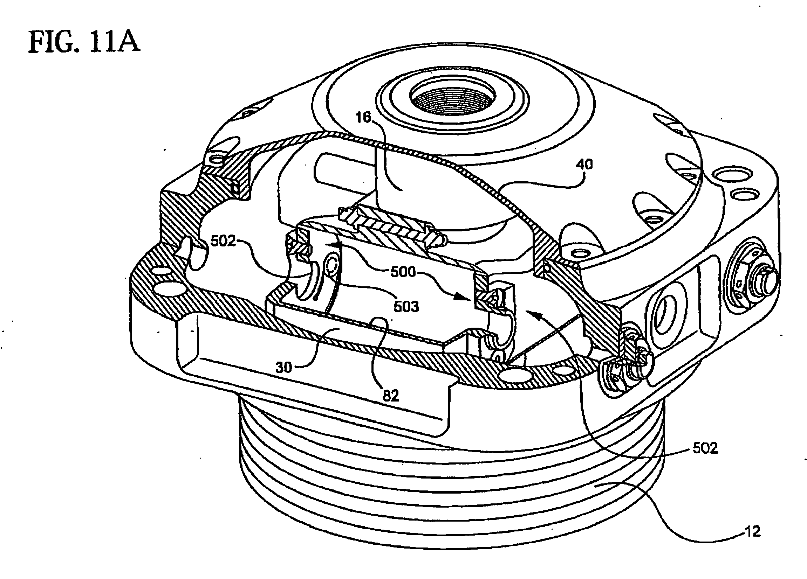

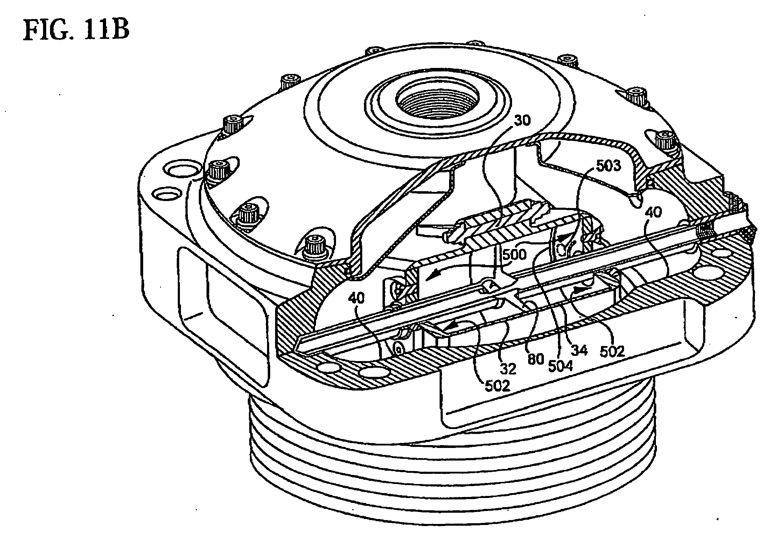

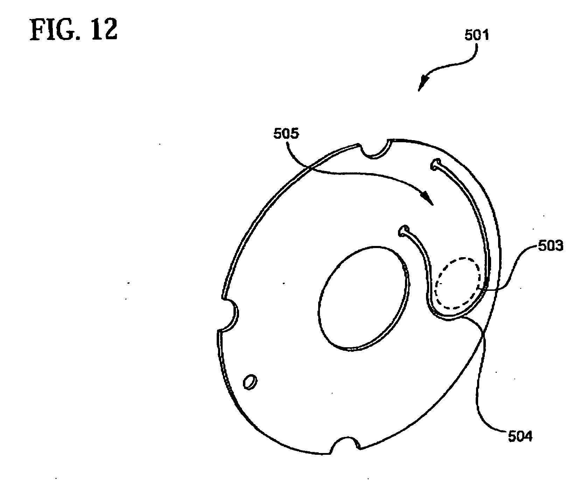

Figure 3A is an exploded perspective view of the fluid-elastomeric damper assembly 10 highlighting the internal pumping device 30 and the backfillers 500 of the first and second variable volume fluid chambers 32 and 34. Figure 3B shows a similar view without the spring plate valves 504 in order to highlight the fluid communication openings 503 in the variable volume fluid chamber walls 502. Similarly Figure 11A-B highlight the backfillers 500 with the spring plate valve 504 covering the fluid communication openings 503 in the fluid chamber walls 502. Figure 12 shows an embodiment of a spring plate 504 which is utilized as a flow blocker flapper valve 501 to control the flow fluid through the fluid communication openings 503 in the chamber walls 502. Spring plate 504 is preferably made from a flexible sheet material such as stainless steel sheet metal with the spring plate flapper tongue 505 sized to cover and block the opening 503.

The invention includes a method for damping a relative motion between a first structure and a second structure. Preferably the method provides a beneficial means to damp a relative motion between a first structure 20 and a second structure 22. The method preferably includes providing a structure housing 24, with the structure housing 24 providing for a structural grounding to one of the structures 20,22. The method preferably includes coupling a plurality of elastomeric seals 12,16 to the housing 24, wherein the housing 24 and the plurality of elastomeric seals 12,16 provide a fluid-elastomeric chamber 40 for containing a damper fluid 72. The method includes providing and disposing a damper fluid 72 within the fluid-elastomeric chamber 40. The method includes disposing an internal fluid pump 30, preferably with at least one fluid moving piston 80 enclosed in a piston housing 82, within the fluid-elastomeric chamber 40. The internal fluid pump 30 preferably comprises a first substantially fluid-filled variable volume chamber 32 and a second substantially fluid-filled variable volume chamber 34 in communication via at least one orifice 86. The first fluid chamber 32 preferably includes a first fluid backfiller 500 and the second fluid chamber 34 includes a second fluid backfiller 500.Preferably the first fluid chamber 32 and the second fluid chamber 34 are in communication with the fluid-elastomeric chamber 40, wherein the relative motion between the first structure 20 and the second structure 22 drives the at least one fluid moving piston 80 to pump the fluid 72 through the at least one orifice 86 with the first fluid backfiller 500 providing fluid communication of the fluid 72 from the fluid-elastomeric chamber 40 into the first fluid chamber 32 and inhibiting a flow of the fluid 72 from the first fluid chamber 32 back into the fluid-elastomeric chamber 40 and the second fluid backfiller 500 providing fluid communication of the fluid 72 from the fluid-elastomeric chamber 40 into the second fluid chamber 34 and inhibiting a flow of the fluid 72 from the second fluid chamber 34 back into the fluid-elastomeric chamber 40 .

The relative motion between the first structure and the second structure pumps the fluid 72 in the internal pumping mechanism 30 in a first direction with the first fluid chamber 32 variable volume increasing and the second fluid chamber 34 variable volume decreasing, and then pumping in a second opposite direction with the second fluid chamber 34 variable volume increasing and the first fluid chamber 32 variable volume decreasing. Preferably the first fluid backfiller 500 includes a first valve 501, and the second fluid backfiller 500 includes a second valve 501, wherein a relative movement of the piston 80 and the piston housing 82 opens the first valve 501 and closes the second valve 501.

Providing the internal pumping mechanism 30 preferably includes providing a second fluid moving piston 80, with the second fluid moving piston 80 forcing the fluid 72 through a second pumping piston restriction orifice 86 between a third substantially fluid-filled variable volume chamber 32 and a fourth substantially-fluid-filled variable volume chamber 34 which are in fluid communication with the fluid-elastomeric chamber 40. The third fluid variable volume chamber 32 preferably includes a third fluid backfiller 500, the third fluid backfiller 500 providing fluid communication of the fluid 72 from the fluid-elastomeric chamber 40 into the third fluid chamber 32 and inhibiting a flow of the fluid 72 from the third fluid chamber 32 into the fluid-elastomeric chamber 40. The fourth fluid variable volume chamber 34 preferably includes a fourth fluid backfiller 500, the fourth fluid backfiller 500 providing fluid communication of the fluid 72 from the fluid-elastomeric chamber 40 into the fourth fluid chamber 34 and inhibiting a flow of the fluid 72 from the fourth fluid chamber 34 into the fluid-elastomeric chamber 40. The relative motion between the first structure 20 and the second structure 22 pumps the fluid 72 through the second restriction orifice 86.

Providing the damper fluid 72 preferably includes providing a damper fluid with a viscosity less than 5x10⁻³ m². s⁻¹ (5,000 centistokes), preferably in the range from 3x10⁻⁵ to 5x10⁻³ m². s⁻¹ (30 to 5,000 centistokes). Preferably the damper fluid 72 has a viscosity less than 1.5x10⁻³ m². s⁻¹ (1,500 centistokes), preferably a viscosity in the range of 4x10⁻⁵ to 1.2x10⁻³ m². s⁻¹ (40 to 1200 centistokes), and more preferably 5x10⁻⁵ to 1x10⁻³ m². s⁻¹ (50 to 1000 centistokes).

Preferably in damping the relative motion between the first structure 20 and the second structure 22 the fluid 72 outside the internal pumping mechanism 30 and contained in the fluid-elastomeric chamber 40 has an operational ambient fluid pressure PA and the fluid 72 inside the internal pumping mechanism variable volume chamber which has the decreasing volume has an operational dynamic fluid pressure PD when pumped by the at least one fluid moving piston 80 with PD ≥ 1.01 PA. Preferably in operation the relative motion compresses the variable volume chamber and decreases the fluid volume at a high rate of change therein that provides for the increase in pressure of the fluid 72 to the operational dynamic fluid pressure PD with the backfiller valve 501 closed and the fluid forced through the restriction orifice 86 into the opposing variable volume chamber in which the variable volume is increasing. Preferably the relative motion drives the internal fluid pump 30 with the damper fluid 72 pressurized in the variable volume chamber with PD-P ≥ 1PSI. In embodiments preferably PD ≥ 1.05PA, preferably PD ≥ 1.06PA, and more preferably PD ≥ 1.07PA. In embodiments preferably PD-PA ≥ 10PSI, preferably PD-PA ≥ 100PSI, more preferably PD-PA ≥ 500PSI. In embodiments preferably PD ≥ 500PSI, such as about 873PSI, and about 1000PSI. In embodiments preferably PA≤00PSI, more preferably PA≤50PSI, such as about 15PSI.

The invention preferably includes a method of making a rotary-wing aircraft fluid-elastomeric damper assembly 10 for damping a relative motion between a first structure 20 and a second structure 22 in a rotary-wing aircraft. The method includes coupling the elastomeric seals 12,16 to the housing 24, wherein the housing 24 and the elastomeric seals 12,16 provide the fluid-elastomeric chamber 40 for containing the damper fluid 72. The method includes disposing the internal fluid pump 30 with the first fluid variable volume chamber 32 and the second fluid variable volume chamber 34 within the fluid-elastomeric chamber 40. The method includes disposing the damper fluid 72 within the fluid-elastomeric chamber 40 wherein the internal fluid pump first variable volume chamber 32 and the second fluid variable volume chamber 34 are substantially filled with the fluid. The substantially fluid filled variable volume chambers are in communication via the at least one orifice 86, with the first fluid chamber 32 including the first fluid backfiller 500 and the second fluid chamber 34 including the second fluid backfiller 500.The first fluid chamber 32 and the second fluid chamber 34 are in communication with the fluid-elastomeric chamber 40, wherein the relative motion between the first structure 20 and the second structure 22 drives the fluid moving piston 80 of the pump 30 to pump the fluid 72 through the orifice 86 with the first fluid backfiller 500 providing fluid communication of the fluid 72 from the fluid-elastomeric chamber 40 into the first fluid chamber 32 and inhibiting a flow of the fluid 72 from the first fluid chamber 32 back into the fluid-elastomeric chamber 40 and the second fluid backfiller 500 providing fluid communication of the fluid 72 from the fluid-elastomeric chamber 40 into the second fluid chamber 34 and inhibiting a flow of the fluid 72 from the second fluid chamber 34 into the fluid-elastomeric chamber 40. Providing the internal fluid pump 30 preferably includes providing the second fluid moving piston 80, with the second fluid moving piston 80 forcing the fluid 72 through the second pumping piston restriction orifice 86 between the third substantially fluid-filled variable volume chamber 32 and the fourth substantially-fluid-filled variable volume chamber 34 which are in fluid communication with the fluid-elastomeric chamber 40. The third fluid variable volume chamber 32 preferably includes the third fluid backfiller 500, the third fluid backfiller 500 providing fluid communication of the fluid 72 from the fluid-elastomeric chamber 40 into the third fluid chamber 32 and inhibiting the flow of the fluid 72 from the third fluid chamber 32 into the fluid-elastomeric chamber 40. The fourth fluid variable volume chamber 34 preferably includes the fourth fluid backfiller 500, the fourth fluid backfiller 500 providing fluid communication of the fluid 72 from the fluid-elastomeric chamber 40 into the fourth fluid chamber 34 and inhibiting the flow of the fluid 72 from the fourth fluid chamber 34 into the fluid-elastomeric chamber 40. The relative motion between the first structure 20 and the second structure 22 pumps the fluid 72 through the second restriction orifice 86. Preferably the provided damper fluid 72 has a viscosity less than 5x10⁻³ m². 3⁻¹ (5,000 centistokes), preferably a viscosity in the range from 3x10⁻⁵ to 5x10⁻³ m². s⁻¹ (30 to 5000 centistokes). Preferably the damper fluid 72 has a viscosity less than 15x10⁻³ m². s⁻¹ (1,500 centistokes), preferably a viscosity in the range of 4x10⁻³ to 1.2x10⁻³ m². s⁻¹ (40 to 1200 centistokes), and more preferably 5x10⁻⁵ to 1x10⁻³ m². S⁻¹ (50 to 1000 centistokes). The backfiller damper assembly utilizes a broad range of viscosities, from relatively low at about 3x10⁻⁵ m². s⁻¹ (30 centistokes) to relatively high at about 5x10⁻³ m², s⁻¹ (5000 centistokes). Preferably the damper fluid 72 outside the internal fluid pump 30 and contained in the fluid-elastomeric chamber 40 has an operational ambient fluid pressure PA. The operational ambient fluid pressure PA is the pressure of fluid 72 outside the internal fluid pump but inside the damper fluid-elastomeric chamber 40 while the damper 10 is operating. The fluid 72 inside the variable volume chamber 32,34 in which the variable volume is being decreased by the relative motion has an operational dynamic fluid pressure PD when pumped by the at least one fluid moving piston with PP ≥ 1.01 PA. Preferably the relative motion compresses the variable volume chamber and decreases the fluid volume at a high rate of change therein that provides for the increase in pressure of the fluid 72 to the operational dynamic fluid pressure PD with the backfiller valve 501 closed and the fluid forced through the restriction orifice 86 into the opposing variable volume chamber in which the variable volume is increasing. In operation the relative motion preferably drives the Internal pumping mechanism 30 with the damper fluid pressurized in the variable volume chamber with PD-PA ≥ 1PSI. In embodiments of the fluid elastomeric damper assembly PD ≥ 1.05PA, preferably PD ≥ 1.06PA, and more preferably PD ≥ 1.07PA. In embodiments of the fluid elastomeric damper assembly PD-PA ≥ 10PSI, preferably PD-PA ≥ 100PSI, more preferably PD-PA ≥ 500PSI. In embodiments of the fluid elastomeric damper assembly preferably PD ≥ :500PSI, such as about 873PSI, and about 1000PSI. In embodiments of the fluid elastomeric damper assembly preferably PA≤100PSI, more preferably PA≤50PSI, such as about 15PSI.

Preferably the relative motion compresses the variable volume chamber and decreases the fluid volume at a high rate of change therein that provides for the increase in pressure of the fluid 72 to the operational dynamic fluid pressure PD, preferably with the backfiller valve 501 closed and the fluid forced through the restriction orifice 86 into the opposing variable volume chamber in which the variable volume is increasing.

It is apparent that there has been provided, in accordance with the assemblies, mechanisms, and methods of the present invention, a fluid-elastomeric damper assembly including an internal pumping mechanism. Although the assemblies, mechanisms, and methods of the present invention have been described with reference to preferred embodiments and examples thereof, other embodiments and examples may perform similar functions and/or achieve similar results. All such equivalent embodiments and examples are within the scope of the present invention and are to be covered by the following claims.

## Claims

1. A method for damping a relative motion between a first structure (20) and a second structure (22), the method comprising: providing a housing (21); coupling a plurality of elastomer seals (12, 16) to the housing (24), wherein the housing (24) and the plurality of elastomeric seals (12,16) provide a fluid-elastomeric chamber (40) for containing a fluid; disposing a fluid within the fluid-elastomeric chamber (40); disposing an internal fluid pump (30) with at least one fluid moving piston (80) within the fluid-elastomeric chamber, the internal fluid pump (30) comprising a first fluid chamber (32) and a second fluid chamber (34) in communication via at least one orifice(86), and **characterised in that** said first fluid chamber (32) including a first fluid backfiller (500) and said second fluid chamber including a second fluid backfiller(500), said first fluid chamber and said second fluid chamber in communication with the fluid-elastomeric chamber, wherein said relative motion between said first structure (20) and said second structure (28) drives said at least one fluid moving piston (80) to pump said fluid through said at least one orifice (86) with said first fluid backfiller(500) providing fluid communication of said fluid from said fluid-elastomeric chamber (40) into said first fluid chamber (32) and inhibiting a flow of said fluid from said first fluid chamber (32) into said fluid-elastomeric chamber (40) and said second fluid backfiller (500) providing fluid communication of said fluid from said fluid-elastomeric chamber (40) into said second fluid chamber (34) and inhibiting a flow of said fluid from said second fluid chamber (34) into said fluid-elastomeric chamber (40).

2. A method as claimed in claim 1, wherein said internal pumping mechanism (30) includes a second fluid moving piston (80), with said second fluid moving piston (80) forcing said fluid through a second restriction orifice (86) between a third fluid chamber (32) and a fourth fluid chamber (34) ; said third fluid chamber including a third fluid backfiller(500), said third fluid backfiller (500) providing fluid communication of said fluid from said fluid-elastomeric chamber (40) into said third fluid chamber (32) and inhibiting a flow of said fluid from said third fluid chamber (32) into said elastomeric chamber (40), said fourth fluid chamber (34) including a fourth fluid backfiller (500) said fourth fluid backfiller(500) providing fluid communication of said fluid from said fluid-elastomeric chamber (40) into said fourth fluid chamber (34) and inhibiting a flow of said fluid from said fourth fluid chamber (34) into said fluid-elastomeric chamber (40) and said relative motion between said first structure (20) and said second structure (22) is operable for pumping the fluid through said second restriction orifice (86).

3. A method as claimed in claim 1, said first fluid backfiller(500) including a first valve (501), said second fluid backfiller(500) including a second valve (501), wherein a movement of said piston (80) opens said first valve (501) and closes said second valve(501).

4. A method as claimed in claim 1 wherein disposing a fluid within the fluid-elastomeric chamber includes providing a damper fluid with a viscosity in the range of 3x10⁻⁵ to 5x10⁻³ m². s⁻¹ (30 to 5,000 centistokes).

5. A method as claimed in claim 2, said first fluid backfiller(500) including a first valve (501), said second fluid backfiller(500) including a second valve (501), said third fluid backfiller(500) including a third valve (501), said fourth fluid backfiller (500) including a fourth valve (501) wherein a movement of said at least one piston (80) opens said first valve (501) and closes said second valve (501), and a movement of said second piston (80) opens said third valve (501) and closes said fourth valve (501).

6. A method as claimed in claim 1, wherein said fluid (72) outside said at least one fluid moving piston (80) and contained in said fluid-elastomeric chamber (40) has an operational ambient fluid pressure PS, and said fluid inside said internal fluid pump (30) has an operation dynamic fluid pressure Pd when pumped by said at least one fluid moving piston (80) with PD ≥ 1.01 PA.

## Patentansprüche

1. Verfahren zur Dämpfung einer Relativbewegung zwischen einem ersten Gebilde (20) und einem zweiten Gebilde (22), umfassend die folgenden Schritte: Schaffen eines Gehäuses (21); Koppeln mehrerer Elastomer-Dichtungen (12, 16) mit dem Gehäuse (24), wobei das Gehäuse (24) und die mehreren Elastomer-Dichtungen (12, 16) eine Fluid-Elastomer-Kammer (40) bilden, die ein Fluid aufnimmt; Lagern eines Fluids in der Fluid-Elastomer-Kammer (40); Anordnen einer internen Fluidpumpe (30) mit wenigstens einem Fluid-Bewegungskolben (80) in der Fluid-Elastomer-Kammer, wobei die interne Fluidpumpe (30) eine erste Fluidkammer (32) und eine zweite Fluidkammer (34) aufweist, die über wenigstens eine Öffnung (86) in Verbindung stehen, **dadurch gekennzeichnet, daß** die erste Fluidkammer (32) eine erste Fluidauffüll-Vorrichtung (500) und die zweite Fluidkammer eine zweite Fluidauffüll-Vorrichtung (500) aufweisen, daß die erste Fluidkammer und die zweite Fluidkammer mit der Fluid-Elastomer-Kammer in Verbindung stehen, so daß die Relativbewegung zwischen dem ersten Gebilde (20) und dem zweiten Gebilde (22) wenigstens einen Fluid-Bewegungskolben (80) antreibt, um das Fluid durch die wenigstens eine Öffnung (86) zu treiben, wobei die erste Fluidauffüll-Vorrichtung (500) eine Fluidverbindung des Fluids aus der ersten Fluid-Elastomer-Kammer (40) in die genannte erste Fluidkammer (32) herstellt und eine Strömung des Fluids aus der ersten Fluidkammer (32) in die Fluid-Elastomer-Kammer (40) verhindert, und daß die zweite Fluidauffüll-Vorrichtung (500) eine Verbindung des Fluids von der genannten Fluid-Elastomer-Kammer (40) in die zweite Fluidkammer (34) herstellt und eine Strömung dieses Fluids aus der ersten erste Fluidkammer (32) in die genannte Fluid-Elastomer-Kammer (40) verhindert.

2. Verfahren nach Anspruch 1, **dadurch gekennzeichnet, daß** der interne Pumpmechanismus (30) einen Fluid-Bewegungskolben (80) aufweist, daß der zweite Fluid-Bewegungskolben (80) das Fluid durch eine zweite Einschnüröffnung (86) zwischen einer dritten Fluidkammer (32) und einer vierten Fluidkammer (34) drückt; daß die dritte Fluidkammer eine dritte Fluid-Auffüll-Vorrichtung (500) aufweist, daß diese dritte Fluid-Auffüll-Vorrichtung (500) eine Strömungs-Verbindung des Fluids aus der Fluid-Elastomerkammer (40) in die dritte Fluidkammer (32) herstellt und eine Strömung des Fluids aus der dritten Fluidkammer (32) in die erste Fluid-Elastomerkammer (40) verhindert, daß die vierte Fluidkammer (34) mit einer vierten Fluid-Auffüll-Vorrichtung (500) versehen ist, daß diese vierte Fluid-Auffüll-Vorrichtung (500) eine Strömungs-Verbindung des Fluids aus der ersten Fluid-Elastomerkammer (40) in die genannte vierte Fluidkammer (34) herstellt und eine Strömung des Fluids aus der vierten Fluidkammer (34) in die erste Fluid-Elastomerkammer (40) verhindert, und daß die Relativbewegung zwischen dem ersten Gebilde (20) und dem zweiten Gebilde (22) in der Weise wirksam ist, daß das Fluid durch die zweite Einschnüröffnung (86) gepumpt wird.

3. Verfahren nach Anspruch 1, **dadurch gekennzeichnet, daß** die erste Fluid-Auffüll-Vorrichtung (500) ein erstes Ventil (501) aufweist und die zweite Fluid-Auffüll-Vorrichtung (500) ein zweites Ventil (501) aufweist, wobei eine Bewegung des Kolbens (80) das erste Ventil (501) öffnet und das zweite Ventil (501) schließt.

4. Verfahren nach Anspruch 1, **dadurch gekennzeichnet, daß** das Anordnen eines Fluids in der Fluid-Elastomerkammer die Schaffung eines Dämpfungsfluids mit einer Viskosität im Bereich von 3x10⁻⁵ bis 5x10⁻³ m² s⁻¹(30 bis 5000 Zentistokes) bewirkt.

5. Verfahren nach Anspruch 2, **dadurch gekennzeichnet, daß** die erste Fluid-Auffüll-Vorrichtung (500) ein erstes Ventil (501) und die zweite Fluid-Auffüll-Vorrichtung (500) ein zweites Ventil (501) aufweisen, daß die dritte Fluid-Auffüll-Vorrichtung (500) mit einem dritten Ventil (501) und die vierte Fluid-Auffüll-Vorrichtung (500) mit einem vierten Ventil (501) versehen sind, wobei eine Bewegung des wenigstens einen Kolbens (80) das vierte Ventil (501) öffnet und das zweite Ventil (501) schließt, während eine Bewegung des zweiten Kolbens (80) das dritte Ventil (501) öffnet und das vierte Ventil (501) schließt.

6. Verfahren nach Anspruch 1, **dadurch gekennzeichnet, daß** das Fluid (72) außerhalb des wenigstens einen Fluid-Bewegungskolbens (80) und innerhalb der Fluid-Elastomerkammer (50) einen operativen Umgebungs-Fluiddruck PS aufweist, während das Fluid im Inneren der internen Fluidpumpe (30) einen dynamischen Betriebs-Fluiddruck Pd besitzt, wenn das Fluid von dem wenigstens einen Fluid-Bewegungskolbens (80) mit einem PD ≥ 1,01 PA gepumpt wird.

## Revendications

1. Procédé pour amortir un mouvement relatif entre une première structure (20) et une seconde structure (22), le procédé comprenant les étapes consistant à : se procurer un boîtier (21) ; coupler une pluralité de joints en élastomère (12, 16) au boîtier (24), le boîtier (24) et la pluralité de joints en élastomère (12, 16) définissant une chambre de fluide et d'élastomère (40) destinée à contenir un fluide ; introduire un fluide à l'intérieur de la chambre de fluide et d'élastomère (40) ; disposer une pompe à fluide interne (30) ayant au moins un piston de déplacement de fluide (80) à l'intérieur de la chambre de fluide et d'élastomère, la pompe à fluide interne (30) comprenant une première chambre de fluide (32) et une deuxième chambre de fluide (34) en communication par l'intermédiaire d' au moins un orifice (86), et **caractérisé par le fait que** ladite première chambre de fluide (32) comprend un premier dispositif de remplissage de fluide (500) et ladite deuxième chambre de fluide comprend un deuxième dispositif de remplissage de fluide (500), ladite première chambre de fluide et ladite deuxième chambre de fluide étant en communication avec la chambre de fluide et d'élastomère, ledit mouvement relatif entre ladite première structure (20) et ladite seconde structure (28) entraînant ledit ou lesdits pistons de déplacement de fluide (80) pour pomper ledit fluide à travers ledit ou lesdits orifices (86) avec ledit premier dispositif de remplissage de fluide (500) qui assure une communication fluidique dudit fluide de ladite chambre de fluide et d'élastomère (40) à ladite première chambre de fluide (32) et inhibe un écoulement dudit fluide de ladite première chambre de fluide (32) à ladite chambre de fluide et d'élastomère (40), et ledit deuxième dispositif de remplissage de fluide (500) qui assure une communication fluidique dudit fluide de ladite chambre de fluide et d'élastomère (40) à ladite deuxième chambre de fluide (34) et inhibe un écoulement dudit fluide depuis ladite deuxième chambre de fluide (34) à ladite chambre de fluide et d'élastomère (40).

2. Procédé selon la revendication 1, dans lequel ledit mécanisme de pompage interne (30) comprend un second piston de déplacement de fluide (80), ledit second piston de déplacement de fluide (80) forçant ledit fluide à travers un second orifice d'étranglement (86) entre une troisième chambre de fluide (32) et une quatrième chambre de fluide (34) ; ladite troisième chambre de fluide comprenant un troisième dispositif de remplissage de fluide (500), ledit troisième dispositif de remplissage de fluide (500) assurant une communication fluidique dudit fluide de ladite chambre de fluide et d'élastomère (40) à ladite troisième chambre de fluide (32) et inhibant un écoulement dudit fluide de ladite troisième chambre de fluide (32) à ladite chambre de fluide et d'élastomère (40), ladite quatrième chambre de fluide (34) comprenant un quatrième dispositif de remplissage de fluide (500), ledit quatrième dispositif de remplissage de fluide (500) assurant une communication fluidique dudit fluide de ladite chambre de fluide et d'élastomère (40) à ladite quatrième chambre de fluide (34) et inhibant un écoulement dudit fluide de ladite quatrième chambre de fluide (34) à ladite chambre de fluide et d'élastomère (40), et ledit mouvement relatif entre ladite première structure (20) et ladite seconde structure (22) étant apte à pomper le fluide à travers ledit second orifice d'étranglement (86).

3. Procédé selon la revendication 1, ledit premier dispositif de remplissage de fluide (500) comprenant une première soupape (501), ledit deuxième dispositif de remplissage de fluide (500) comprenant une deuxième soupape (501), un déplacement dudit piston (80) ouvrant ladite première soupape (501) et fermant ladite deuxième soupape (501).

4. Procédé selon la revendication 1, dans lequel l'introduction d'un fluide à l'intérieur de la chambre de fluide et d'élastomère comprend la fourniture d'un fluide d'amortissement ayant une viscosité se situant dans la plage de 3x10⁻⁵ à 5x10⁻³ m².s⁻¹ (30 à 5 000 centistokes).

5. Procédé selon la revendication 2, ledit premier dispositif de remplissage de fluide (500) comprenant une première soupape (501), ledit deuxième dispositif de remplissage de fluide (500) comprenant une deuxième soupape (501), ledit troisième dispositif de remplissage de fluide (500) comprenant une troisième soupape (501), ledit quatrième dispositif de remplissage de fluide (500) comprenant une quatrième soupape (501), un déplacement dudit ou desdits pistons (80) ouvrant ladite première soupape (501) et fermant ladite deuxième soupape (501), et un déplacement dudit second piston (80) ouvrant ladite troisième soupape (501) et fermant ladite quatrième soupape (501).

6. Procédé selon la revendication 1, dans lequel ledit fluide (72) à l'extérieur dudit ou desdits pistons de déplacement de fluide (80) et contenu dans ladite chambre de fluide et d'élastomère (40) a une pression de fluide ambiante fonctionnelle PS, et ledit fluide à l'intérieur de ladite pompe à fluide interne (30) a une pression de fluide dynamique fonctionnelle Pd lorsqu'il est pompé par ledit ou lesdits pistons de déplacement de fluide (80), avec PD ≥ 1,01 PA.
